# EUROPEAN PATENT APPLICATION

(11) **EP 2 699 004 A1**
(43) Date of publication of application: **19.02.2014**
(21) Application number: 13179565.0
(22) Date of filing: 07.08.2013
(51) Int. Cl.: H04N 13/00, H04N 13/04

(54) **Method of conversion of an anaglyph image into a full-color 3d image**

(30) Priority: 17.08.2012 EP 12306008
(71) Applicant: Thomson Licensing, 92130 Issy-les-Moulineaux (FR)
(72) Inventor: Sacré, Jean-Jacques, 35410 Chateaugiron (FR); Blondé, Laurent, 35576 Cesson-Sévigné (FR); Thiebaud, Sylvain, 35576 Cesson-Sévigné (FR)
(74) Representative: Browaeys, Jean-Philippe

(57) **Abstract**

To generate a full-color left view, a the cyan(left) component of the anaglyph is added with its red component after being laterally shifted to the left, and, symmetrically, to generate a full-color right view, the red(right) component of the anaglyph is added with its cyan component after being laterally shifted to the right. According to the invention, the shift to the left of the red(right) component is obtained by adding the "details" of the cyan(left) component to a blurred red(right) component, and vice-versa. The "details" of the cyan(left) component is preferably calculated by subtracting a blurred cyan(left) component from the cyan(left) component itself.

## Description

### Technical Field

The invention relates to the generation of standard full color 3D images (i.e. a right view and a left view that are both polychromatic) from anaglyph images, i.e. viewable in 3D through colored glasses, i.e. wherein none of the left and right views are full color.

### Background Art

The documents US3712199 and US2012/133743 disclose very cheap 3D image capture devices able to provide anaglyph images ; such image capture devices are very cheap because they use only one lens for the left and the right view, and a light-transmitting section with two or three different coplanar light-transmittive color filters generally positioned near the pupil of the lens. Each light-transmittive area corresponds to a specific color component of the anaglyph image provided by the device.

Very common anaglyph images have for instance a cyan color component for the left eye and a red color component for the right eye. Note that specific advantages are obtained when using magenta-cyan anaglyph images. Magenta-cyan anaglyph images have indeed three color components : a green component for instance for the left eye, a red component for instance for the right eye, and a blue component for both eyes. In an article published in January 2009, entitled "Magenta-cyan Anaglyphs", and authored by Robin Lobel, the advantage of using such magenta-cyan anaglyph images are emphasized over other types of combination of primary colors, as the red-cyan anaglyphs for instance. Such magenta-cyan anaglyphs send a common primary blue color to both eyes. The ghosting of blue color that may occur due the mixing of blue left and blue right primary images is avoided by blurring horizontally these images by an amount equal to the average parallax. This blue component can notably be implemented as a central view as for a virtual "central eye". Due the low spatial frequency perception of blue by the human eye, such a blurring does not reduce the sharpness of the colored images as perceived by the viewers.

Getting anaglyph images as proposed above raises the problem of converting them into full color 3D images.

The software called ImageIQ3D, provided by the HDlogix company offers a specific function to convert anaglyph images into a pair of full-color right-eye view and full-color left-eye view, i.e. a full-color 3D image.

From a first green component for a left view and a second red-and-blue component for a right view, the full-color stereoscopic version of the image can be reconstructed using the specific method of optical flow implemented by this software. This reconstruction is performed according to the following steps :
- estimation of the optical flow between the green component and the red-and-blue component, motion compensate the green component toward the red-and-blue component, and add them together to get the full-color right-eye image;
- estimation of the optical flow between the red-and-blue component and the green component, motion compensate the red-and-blue component toward the green component, and add them together to get the full-color left-eye image.

At the following website http://www.vrtifacts.com/how-to-teardowns-tutorials/dump-those-silly-colored-3d-glasses/, one can find a "gadget at home that translates anaglyph movies into full color" 3D movies.

Taking for instance a cyan(left)-red(right) anaglyph, all these known conversion methods propose to generate a full-color left view by adding the cyan(left) component of the anaglyph with its red component after having laterally shifted this red(right) component to the left, and, symmetrically, to generate a full-color right view by adding the red(right) component of the anaglyph with its cyan component after having laterally shifted this cyan(left) component to the right.

Therefore, the key issue of the anaglyph-to-full-color-3D conversion methods is the calculation of the shifted-to-left red component and of the shifted-to-right cyan component.

The Master of Science thesis of Mark de Groot, entitled "3D-TV Signal Conversion Algorithms and Embedded Architectures", published in September 2009 by the Eindhoven University of Technology - Department of Electrical Engineering - Signal Processing Systems, proposes at pages 9-14 starting at paragraph 2.2. different methods to "restore" a full-Colored 3D image from anaglyph images, by retrieving the missing color components from each other's view, and disclose notably two methods to calculate the lateral shift to apply to the red or to the cyan components.

### Summary of invention

The invention proposes a simpler method where, taking the same example of cyan(left)-red(right) anaglyph images as above, the shift to the left of the red(right) component is obtained by adding the "details" of the cyan(left) component to a blurred red(right) component, and vice-versa. Preferably, the blurring is performed by using a low pass filter. Preferably, the low pass filter is of a Gaussian type. The "details" of the cyan(left) component is preferably calculated by subtracting a blurred cyan(left) component from the cyan(left) component itself.

Symmetrically, the shift to the right of the cyan(left) component is obtained by adding the "details" of the red(right) component to a "low-filtered" cyan(left) component. The "details" of the red(right) component is preferably calculated by subtracting a blurred red(right) component from the red(right) component itself.

An advantage of the method according to the invention is that it is far simpler compared to some of the above methods, therefore requiring less computing resources. Advantageously, the method can then be implemented directly in cheap 3D image capture devices as mentioned above in reference to documents US3712199 and US2012/133743, in order to allow them to provide full color 3D images.

The method according to the invention has been notably developed in the course of anaglyph images having three color components as those mentioned above : one for the left eye, a second for the right eye, and a third one for both eyes, notably from an intermediate view point between the two eyes. Such anaglyph are preferably cyan-magenta anaglyphs. In such a situation, the method according to the invention can be applied and the third component is added with no lateral shift both for the generation of the left view and for the generation of the right view.

More particularly, the subject of the invention is a method of converting an anaglyph image comprising at least a first color component for a left view and a second color component for a right view into a 3D full-color image comprising a full-color left view and a full-color right view,
wherein said first color component corresponds to a first spectral range,
wherein said second color component corresponds to a second spectral range which does not overlap significantly the first spectral range, and
wherein said full-color left view and said full-color right view both includes the first spectral range and the second spectral range,
said method comprising the step of :
- from the difference between the first color component for the left view and a blurred first color component for the left view, calculating an image of details for the right view,
- from the difference between the second color component for the right view and a blurred second color component for the right view, calculating an image of details for the left view,
- generating a second color component for the left view by adding the blurred first color component for the left view and the image of details for the left view,
- generating a first color component for the right view by adding the blurred second color component for the right view and the image of details for the right view,
- composing the full-color left view by adding at least the first color component for the left view and the second color component for the left view,
- composing the full-color right view by adding at least the first color component for the right view and the second color component for the right view.

The subject of the invention is also a method of converting an anaglyph image comprising at least a first color component for a left view and a second color component for a right view into a 3D full-color image comprising a full-color left view and a full-color right view,
wherein said first color component corresponds to a first spectral range,
wherein said second color component corresponds to a second spectral range which does not overlap significantly the first spectral range, and
wherein said full-color left view and said full-color right view both includes the first spectral range and the second spectral range,
said method comprising the step of :
- blurring the first color component for the left view in order to get a blurred first color component for the left view,
- blurring the second color component for the right view in order to get a blurred second color component for the right view
- generating an image of details for the right view by calculating the difference between the first color component for the left view and the blurred first color component for the left view,
- generating an image of details for the left view by calculating the difference between the second color component for the right view and the blurred second color component for the right view,
- generating the second color component for the left view by adding the blurred first color component for the left view and the image of details for the left view,
- generating the first color component for the right view by adding the blurred second color component for the right view and the image of details for the right view,
- composing the full-color left view by adding at least the first color component for the left view and the second color component for the left view,
- composing the full-color right view by adding at least the first color component for the right view and the second color component for the right view.

The wording "at least" means that the addition may comprise more than two members : according to a preference below, the addition includes a third color component.

Preferably, said first spectral range corresponds to a cyan color and said second spectral range corresponds to a red color.

Preferably, said anaglyph image also comprises a third color component for a central view, i.e. a view between said left view and said right view, said third color component corresponds to a third spectral range which does not overlap significantly the first spectral range and the second spectral range, said full-color left view and said full-color right view both includes this third spectral range, and :
- for composing the full-color left view, said third component for the central view is also added,
- for composing the full-color right view, said third component for the central view is also added.

Preferably, said first spectral range corresponds to a green color, said second spectral range corresponds to a red color and said third spectral range corresponds to a blue color.

The wording "color component" is specifically related to the anaglyph technical field. Anaglyph images have for instance a cyan color component for the left eye and a red color component for the right eye. It means that a viewer wearing a cyan-passing glass on the left eye will capture on his left eye a cyan component of such anaglyph images, and that the same viewer wearing a red-passing glass on the right eye will capture on his right eye a red component of such anaglyph images. The first color component corresponds to the color of the anaglyph image filtered by the cyan-passing glass. Such a filtered color can be represented by its tristimulus values X, Y, Z. The second color component corresponds to the color of the anaglyph image filtered by the red-passing glass. Such a filtered color can also be represented by its tristimulus values. This example illustrates the definition of a color component.

The subject of the invention is also any converting device that it is able to implement the method of converting according to the invention.

The subject of the invention is also a 3D image capture device able to capture anaglyph images comprising at least a first color component for a left view and a second color component for a right view wherein this device includes a converting device according to the invention. Preferably, this image capture device comprises only one lens for imaging the scene on a light sensor component, which includes a light-transmitting section with two or three different coplanar light-transmittive color filters having different spectral ranges. The spectral ranges of these color filters may overlap. Preferably, the light-transmitting section is positioned near the pupil of the lens. This image capture device is preferably of the type described in documents US3712199 and US2012/133743 already mentioned.

### Brief description of the drawings

The invention will be more clearly understood on reading the description which follows, given by way of non-limiting example and with reference to the appended figures in which:
- Figure 1 is a flowchart of the conversion method according to a first embodiment of the invention,
- Figure 2 is a flowchart of the conversion method according to a second embodiment of the invention.

### Description of embodiments

It will be appreciated by those skilled in the art that the flow charts presented herein represent conceptual views of illustrative circuitry embodying the invention. They may be substantially represented in computer readable media and so executed by a computer or processor, whether or not such computer or processor is explicitly shown. Such a processor may be part of an image capture device.

It is to be understood that the invention, notably the functions of the various elements shown in the figures, may be implemented in various forms of hardware, software, firmware, special purpose processors, or combinations thereof, which may advantageously embedded in an image capture device. The invention may be notably implemented as a combination of hardware and software. Moreover, the software may be implemented as an application program tangibly embodied on a program storage unit. The application program may be uploaded to, and executed by, a machine comprising any suitable architecture. The machine may also be implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an image capture device, an additional data storage unit and a printing unit.

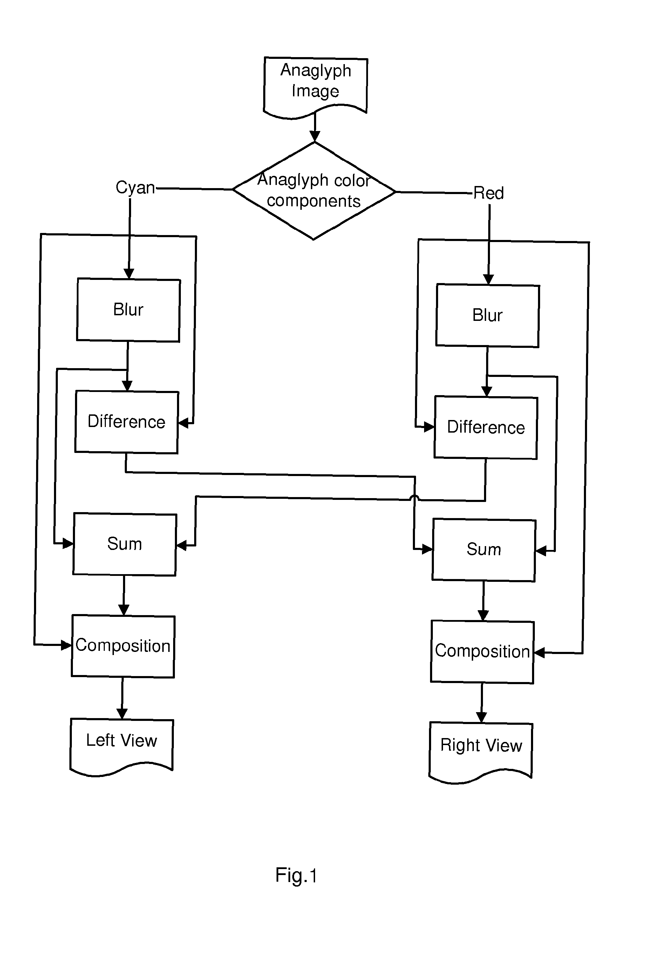

**A first embodiment** of the method according to the invention will now be described in reference to figure 1.

The anaglyph image to be converted comprises a first cyan component for a left view and a second red component for a right view, namely this anaglyph image is of the cyan-red type. The definition of such a cyan component and red component corresponds to the example given above in reference to a viewer wearing a cyan-passing glass on the left eye and a red-passing glass on the right eye. Each color component may be represented by its tristimulus values. The first cyan component corresponds to a first spectral range, for instance comprised between 400 nm and 600 nm. The second red component corresponds to a second spectral range, for instance a spectral range above 600 nm. The first and the second spectral ranges do not overlap.

The method of converting comprises the following steps :
- blurring the cyan component for the left view in order to get a blurred cyan component for the left view; the blurring is preferably performed by using a Gaussian low-pass filter;
- blurring the red component for the right view in order to get a blurred red component for the right view; again, the blurring is preferably performed by using a Gaussian low-pass filter;
- from the difference between the cyan component for the left view and the blurred cyan component for the left view, calculating an image of details for the right view; such a difference between two versions of a same view in the same color component, one blurred, the other not blurred, emphasizes the details of this view;

- from the difference between the red component for the right view and the blurred red component for the right view, calculating an image of details for the left view; such a difference between two versions of a same view in the same color component, one blurred, the other not blurred, emphasizes the details of this view;
- generating a red component for the left view by adding the blurred cyan component for the left view and the image of details for the left view; such a red color component may also be represented by its tristimulus values;
- generating a cyan component for the right view by adding the blurred red component for the right view and the image of details for the right view; such a cyan color component may also be represented by its tristimulus values;
- composing a full-color left view by adding the cyan component and the red component, both for the left view; if this cyan component and this red component are represented by their tristimulus values, the addition of the tristimulus values of this cyan component and of this red component will provide the full-color left view;
- composing a full-color right view by adding the cyan component and the red components, both for the right view; again, if this cyan component and this red component are represented by their tristimulus values, the addition of the tristimulus values of this cyan component and of this red component will provide the full-color right view;

The pair of full-color left view and full-color right view that is obtained makes a complete full-color 3D image with limited computer resources.

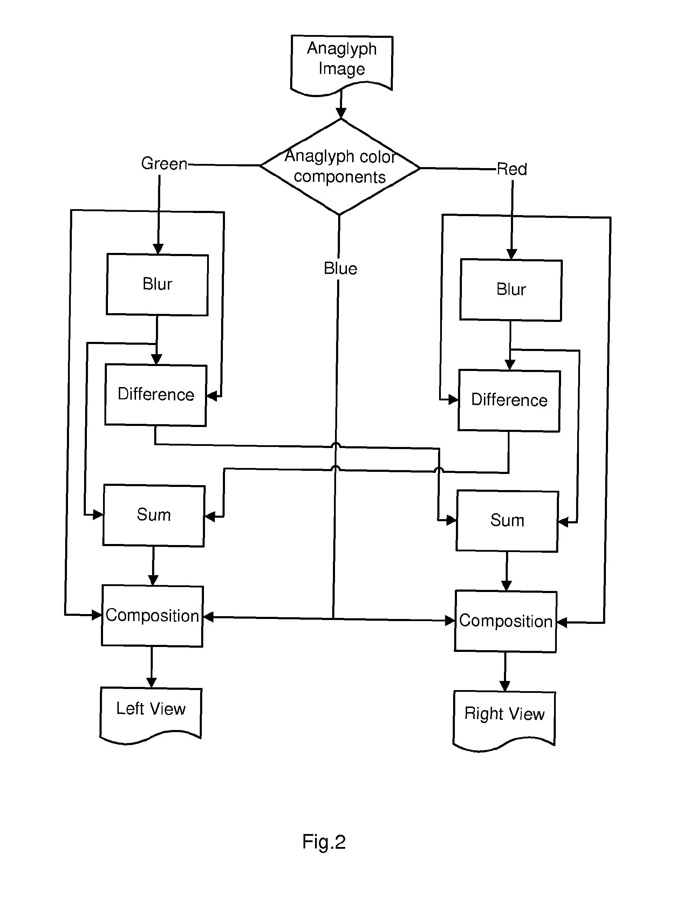

**A second embodiment** of the method according to the invention will now be described in reference to figure 2.

The anaglyph image to be converted comprises a first green component for a left view, a second red component for a right view, and a third blue component for a central view, as for instance described in the article entitled "Magenta-cyan Anaglyphs" cited above and authored by Robin Lobel, where the blue component for the central view is in fact sent both to the left and right eyes. The first green component corresponds to a first spectral range, for instance a spectral range comprised between 500 nm and 600 nm. The second red component corresponds to a second spectral range, for instance a spectral range above 600 nm. The third blue component corresponds to a third spectral range, for instance a spectral range comprised between 400 nm and 500 nm. The first, the second and the third spectral ranges do not overlap.

The method of converting comprises the following steps :
- blurring the green component for the left view in order to get a blurred green component for the left view; the blurring is preferably performed by using a Gaussian low-pass filter;
- blurring the red component for the right view in order to get a blurred red component for the right view; again, the blurring is preferably performed by using a Gaussian low-pass filter;
- from the difference between the green component for the left view and the blurred green component for the left view, calculating an image of details for the right view; such a difference between two versions of a same view in the same color component, one blurred, the other not blurred, emphasizes the details of this view;
- from the difference between the red component for the right view and the blurred red component for the right view, calculating an image of details for the left view; such a difference between two versions of a same view in the same color component, one blurred, the other not blurred, emphasizes the details of this view;
- generating a red component for the left view by adding the blurred green component for the left view and the image of details for the left view,
- generating a green component for the right view by adding the blurred red component for the right view and the image of details for the right view,
- composing a full-color left view by adding the green component for the left view, the red component for the left view, and the blue component for the central view; if this green component, red component and blue component are represented by their tristimulus values, the addition of the tristimulus values of these components will provide the full-color left view;
- composing a full-color right view by adding at least the green component for the right view, the red component for the right view and the blue component for the central view; if this green component, red component and blue component are represented by their tristimulus values, the addition of the tristimulus values of these components will provide the full-color right view.

The pair of full-color left view and full-color right view that is obtained makes a complete full-color 3D image with limited computer resources.

The method according to the invention may be applied to any other types of anaglyph images as those disclosed in the two specific embodiments above.

Because the blocks depicted in the accompanying drawings are preferably implemented in software, the actual connections between these blocks may differ depending upon the manner in which the present invention is implemented. Given the teachings herein, one of ordinary skill in the pertinent art will be able to contemplate these and similar implementations or configurations of the invention.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

## Claims

1. Method of converting an anaglyph image comprising at least a first color component for a left view and a second color component for a right view into a 3D full-color image comprising a full-color left view and a full-color right view,
wherein said first color component corresponds to a first spectral range,
wherein said second color component corresponds to a second spectral range which does not overlap significantly the first spectral range, and
wherein said full-color left view and said full-color right view both includes the first spectral range and the second spectral range,
said method comprising the step of :
- from the difference between the first color component for the left view and a blurred first color component for the left view, calculating an image of details for the right view,
- from the difference between the second color component for the right view and a blurred second color component for the right view, calculating an image of details for the left view,
- generating a second color component for the left view by adding the blurred first color component for the left view and the image of details for the left view,
- generating a first color component for the right view by adding the blurred second color component for the right view and the image of details for the right view,
- composing the full-color left view by adding at least the first color component for the left view and the second color component for the left view,
- composing the full-color right view by adding at least the first color component for the right view and the second color component for the right view.

2. Method of converting according to claim 1 wherein said first spectral range corresponds to a cyan color and wherein said second spectral range corresponds to a red color.

3. Method of converting according to claim 1 wherein said anaglyph image also comprises a third color component for a central view, i.e. a view between said left view and said right view,
wherein said third color component corresponds to a third spectral range which does not overlap significantly the first spectral range and the second spectral range, and
wherein said full-color left view and said full-color right view both includes this third spectral range,
**characterized in that** :
- for composing the full-color left view, said third component for the central view is also added,
- for composing the full-color right view, said third component for the central view is also added.

4. Method of converting according to claim 3 wherein said first spectral range corresponds to a green color, wherein said second spectral range corresponds to a red color and wherein said third spectral range corresponds to a blue color.

5. Converting device for converting an anaglyph image comprising at least a first color component for a left view and a second color component for a right view into a 3D full-color image comprising a full-color left view and a full-color right view,
wherein said first color component corresponds to a first spectral range,
wherein said second color component corresponds to a second spectral range which does not overlap significantly the first spectral range, and
wherein said full-color left view and said full-color right view both includes the first spectral range and the second spectral range,
said converting device comprising :
- means for generating images configured to generate :
A/ an image of details for the right view by calculating the difference between the first color component for the left view and a blurred first color component for the left view,
B/ an image of details for the left view by calculating the difference between the second color component for the right view and a blurred second color component for the right view,
- means for generating color components configured to generate :
A/ a second color component for a left view by adding the blurred first color component for the left view and the image of details for the left view,
B/ a first color component for a right view by adding the blurred second color component for the right view and the image of details for the right view,
- means for composing configured to compose the full-color left view by adding at least the first color component for the left view and the generated second color component for the left view, and to compose the full-color right view by adding at least the generated first color component for the right view and the second color component for the right view.

6. Converting device according to claim 5, wherein said anaglyph image also comprises a third color component for a central view, i.e. a view between said left view and said right view, wherein said third color component corresponds to a third spectral range which does not overlap significantly the first spectral range and the second spectral range, and wherein said full-color left view and said full-color right view both includes this third spectral range, in which said means for composing are configured to compose the full-color left view also by adding said third component for the central view, and to compose the full-color right view also by adding said third component for the central view.

7. Image capture device adapted to capture anaglyph images comprising at least a first color component for a left view and a second color component for a right view **characterized in that** it includes a converting device according to any one of claim 5 to 6.
